# EUROPÄISCHE PATENTSCHRIFT

(11) **EP 2 883 273 B1**
(45) Veröffentlichungstag und Bekanntmachung des Hinweises auf die Patenterteilung: **28.02.2018**
(21) Anmeldenummer: 13752808.9
(22) Anmeldetag: 16.07.2013
(51) Int. Cl.: H01Q 1/22, H01Q 13/10, H01R 13/506

(54) **STECKVERBINDER-GEHÄUSE MIT EINEM RFID-TRANSPONDER**
ELECTRICAL CONNECTOR HOUSING HAVING AN RFID TRANSPONDER
BOÎTIER DE CONNECTEUR ENFICHABLE ÉQUIPÉ D'UN TRANSPONDEUR RFID

(30) Priorität: 08.08.2012 DE 102012107270
(43) Veröffentlichungstag der Anmeldung: 17.06.2015
(73) Patentinhaber: Harting Electric GmbH & Co. KG, 32339 Espelkamp (DE)
(72) Erfinder: TRÖGER, Lutz, 49082 Osnabrück (DE); SCHMIEDING, Dirk, 49152 Bad Essen (DE)
(86) Internationale Anmeldenummer: PCT/DE2013/100263
(87) Internationale Veröffentlichungsnummer: WO 2014/023296

(56) Entgegenhaltungen:
- DE-U1-202008 001 548
- DE-U1-202008 001 549
- US-A1- 2004 052 471
- US-A1- 2006 049 942
- US-A1- 2008 309 495
- US-A1- 2011 274 437

## Beschreibung

Die Erfindung betrifft ein Steckverbinder-Gehäuse gemäß dem Oberbegriff des unabhängigen Patentanspruchs 1.

RFID (Radio Frequency Identification Device)-Transponder werden für die verschiedensten Anwendungen eingesetzt, beispielsweise zum elektronischen Identifizieren von Gegenständen.

### Stand der Technik

Im Stand der Technik wurde bereits vorgeschlagen, einen Steckverbinder beispielsweise zur Kodierung mit einem RFID-Transponder auszustatten.

So offenbart die Druckschrift DE 10 2009 053 364 B3 ein Steckverbinder-Gehäuse, das in einer vorteilhaften Ausgestaltung ein Kodierelement aufweist. Das Kodierelement ist dabei farblich markiert und/oder mit einem RFID-Transponder ausgestattet.

Weiterhin offenbart die Druckschrift DE 20 2008 001 549 U1 einen RFID-Transponder mit einer Schlitzantenne in unterschiedlichen Ausführungsformen.

Die Druckschrift DE 10 2005 022 281 A1 offenbart eine elektronische Einheit mit einer Eigenidentifizierungs-Information, umfassend ein Gehäuse, einen in dem Gehäuse aufgenommenen elektronischen Schaltkreis und einen an dem Gehäuse angesetzten Verbinder, wobei der Verbinder Signalanschlüsse aufweist, die mit dem elektronischen Schaltkreis verbunden sind, und ein RFID-Etikett mit einer Antennenvorrichtung, welches an dem Verbinder angebracht ist. Das RFID-Etikett speichert Identifizierungsinformationen und ist dafür ausgelegt, ein Antwortsignal, welches die Identifizierungsinformation enthält, über die Antennenvorrichtung in Antwort auf ein Sendeanforderungssignal zu senden, welches von außen her übertragen und von der Antennenvorrichtung empfangen wird. In diesem Zusammenhang wird offenbart, das RFID-Etikett mit dem Verbinder zu einer Einheit zusammenzufassen, wenn der Verbinder spritzgegossen wird.

Auch die Druckschrift DE 10 2004 060 510 A1 offenbart es, einen Transponder in ein Bauteil einzuspritzen.

In der Druckschrift DE 102 44 304 B3 wird offenbart, den Transponder von vornherein mit dem Stecker beziehungsweise im Kunststoff um den Stecker einzuspritzen.

Die Druckschrift DE 20 2006 008 817 U1 offenbart eine Mess- und Prüfeinrichtung mit einem Transponder.

Die Druckschrift EP 2 182 471 A1 offenbart einen Aufbau eines Transponderetiketts auf einer metallischen Grundfläche. Als Antenne für das Transponderetikett wird eine schlitzförmige Ausnehmung in einer elektrisch leitenden Oberfläche, d.h. eine Schlitzantenne verwendet. Die metallische Grundfläche besitzt ebenfalls einen Schlitz, der an den Schlitz der Schlitzantenne angepasst ist. Dabei wird das Transponderetikett so auf der Grundfläche angebracht, dass hervorragende Sende- und Empfangseigenschaften erzielt werden können.

Die Druckschrift DE 102 49 414 A1 offenbart eine Steckverbinderkomponente, wobei mindestens ein Bauteil der Steckverbinderkomponente mit einem jeweiligen elektronischen Datenträger kraft- und/oder form- und/oder stoffschlüssig verbindbar ist, wobei Steckverbinderkomponenten und/oder bauteilspezifische Informationen vom Datenträger elektronisch speicherbar, mindestens einem Schreib/Lesegerät berührungslos einlesbar und mindestens an ein Schreib/Lesegerät berührungslos ausgebbar sind. Die erfindungsgemäße Steckverbinderkomponente ermöglicht eine starke Vereinfachung im Bereich Handling-, Transportlogistik und Fertigungsprozess von Steckverbinderkomponenten.

Die Druckschrift US 2011/0043413 A1 beschreibt Steckverbinder mit eingebetteten Antennen.

Die Druckschrift US 2006/0250250 A1 offenbart einen RFID-Tag mit einer Schlitzantenne aus Kupferfolie.

Die Druckschrift US 2010/0188306 A1 offenbart eine schmale Schlitzantenne mit einer leitfähigen Folie und einem Dielektrikum.

Die Druckschrift US 2008/0136716 A1 offenbart einen RJ45-Stecker mit einer Antenne und einem Bluetooth oder WLAN-Transceiver.

Die Druckschriften DE 20 2007 018 305 U1 und DE 20 2007 018 307 U1 offenbaren den Einsatz der MID-Technik zur platzsparenden Anordnung von Leiterbahnen.

Die Druckschrift US 2006/049942 A1 offenbart eine RFID-Tagmontage auf einem Kabelbaum und eine Methode zur Montage eines Kabelbaums.

Die Druckschrift US 2004/052471 A1 offenbart ein Steckverbindersystem für die dynamische Aktualisierung von Informationen im Zusammenhang mit einem Netzwerk und Methoden für die Entwicklung der Steckverbindersysteme.

Die Druckschrift DE 20 2008 001 548 U1 zeigt einen gekapselten RFID-Transponder mit einer flexiblen Antenne.

Die Druckschrift US 2008/309495 A1 offenbart eine Verpackung mit einem RFID -Tag und einer Verstärker-Antenne.

Die Druckschrift US 2011/274437 A1 betrifft schließlich den Einsatz von RFID-Tags in LWL-Kommunikationsverbindungen. Dadurch können Daten, betreffend eine dazugehörige Lichtwellenleiterkomponente, vom RFID-Tag an einen RFID-Reader gesendet werden. Weiterhin werden für den RFID-Tag unterschiedliche Antennentypen, u.a. eine Schlitzantenne, offenbart.

Ein Nachteil im Stand der Technik besteht darin, dass die aus dem Stand der Technik bekannten an Steckverbindern angebrachten RFID-Transponder eine für viele Anwendungen nicht ausreichend große Reichweite aufweisen.

### Aufgabenstellung

Die Aufgabe der vorliegenden Erfindung besteht somit darin, eine Bauform für ein Steckverbinder-Gehäuse mit einem darin integrierten RFID-Transponder anzugeben, die eine größere Reichweite ermöglicht, als dies dem Stand der Technik entspricht.

Diese Aufgabe wird mit einem Steckverbinder-Gehäuse der eingangs erwähnten Art durch die Merkmale des kennzeichnenden Teils des unabhängigen Patentanspruchs 1 gelöst.

Bei der Erfindung handelt es sich um ein Steckverbinder-Gehäuse mit einem integrierten RFID-Transponder, der beispielsweise mit einem mobilen Handheld RFID-Reader auch über Entfernungen von mehreren Metern gelesen werden kann.

Vorteilhafte Ausgestaltungen der Erfindung sind in den abhängigen Unteransprüchen 2-11 angegeben.

Ein Vorteil der Erfindung besteht darin, dass der RFID-Transponder des Steckverbinder-Gehäuses von einem RFID-Reader über eine Distanz von mehreren Metern ausgelesen werden kann. Dadurch ist eine sogenannte "Bulk"-Auslesung, d.h. eine Auslesung ganzer Kabelstränge und Steckverbinderbanken, aus einer entsprechenden Entfernung möglich.

In einer vorteilhaften Weiterbildung ist die Schlitzantenne formschlüssig in das Steckverbinder-Gehäuse eingefügt oder formschlüssig an das Steckverbinder-Gehäuse angefügt.

In einer vorteilhaften Ausgestaltung können im RFID-Chip spezifische Informationen wie Kontaktinformationen, Pin-Belegungen und Installationshinweise gespeichert sein und vom RFID-Reader ausgelesen werden.

Von besonderem Vorteil ist es dabei, dass, verglichen mit einer Beschriftung, eine große Menge an Informationen bereitgestellt werden kann.

In einer weiteren Ausführungsform ist ein Antennenkörper in Form einer Metallfolie, insbesondere einer selbstklebenden Kupferfolie, formschlüssig in den Steckverbinder eingeklebt. Dies hat den Vorteil, dass ein bereits bestehendes Steckverbinder-Gehäuse händisch nachgerüstet werden kann.

In einer bevorzugten Ausführungsform ist eine Metallfolie als Einlegeteil direkt in das Gehäuse des Steckverbinders eingespritzt. Dazu wird die Metallfolie beim Herstellungsprozess in das Spritzgusswerkzeug eingelegt und in einem darauffolgenden Arbeitsschritt mit Kunststoff umspritzt. Dies hat den Vorteil einer automatisierbaren Herstellung und dementsprechend geringer Herstellungskosten bei hohen Stückzahlen.

In einer weiteren bevorzugten Ausführungsform kann die Schlitzantenne durch ein MID (moulded interconnect device)-Verfahren erzeugt sein. Insbesondere kann die Schlitzantenne mit Hilfe einer bevorzugt lokalen Beschichtung mit einem zum LDS (Laser Direct Structuring)-Verfahren geeigneten Lack und einer entsprechenden Laseraktivierung, sowie den dazugehörigen Ätz-, und Beschichtungsverfahren erzeugt werden.

In einer anderen Ausführungsform ist der RFID-Transponder, und insbesondere seine Schlitzantenne, als festes Einbauteil ausgeführt, das sich formschlüssig in das Steckverbinder-Gehäuse einlegen lässt. Die Befestigung des RFID-Transponders kann dann in Form einer Verrastung erfolgen, beispielsweise durch biegsame Rastnasen am Steckverbinder-Gehäuse sowie entsprechende Ausnehmungen an der Schlitzantenne. Alternativ dazu können in das Steckverbinder-Gehäuse auch sogenannte "Clips" eingearbeitet werden, die dazu dienen, den RFID-Transponder lösbar zu befestigen.

Das Steckverbinder-Gehäuse kann auch eine Tasche aufweisen, in welche der RFID-Transponder zumindest teilweise einlegbar und durch die er fixierbar ist.

Dies hat den Vorteil, dass unterschiedlich große RFID-Chips mit unterschiedlichen Speichergrößen Verwendung finden und je nach Bedarf entsprechend befestigt werden können.

In einer vorteilhaften Ausführung weist der RFID-Tag zusätzlich eine Koppelschleife zur magnetischen Kopplung des RFID-Chips an die Schlitzantenne auf.

In einer weiteren bevorzugten Ausführungsform umfasst das Steckverbinder-Gehäuse einen dazugehörigen, darin einfügbaren sogenannten "Modulrahmen", wobei sich in den Modulrahmen üblicherweise dadurch auszeichnet, dass sich viele unterschiedliche sogenannte "Steckverbinder-Module" in ihn einsetzen lassen. In oder an diesem Modulrahmen kann der RFID-Tag befestigt werden. Die Befestigung des RFID-Tags kann mit Hilfe von Clips erfolgen, insbesondere, wenn es sich um einen RFID-Tag handelt, der auf Basis einer Leiterplatte aufgebaut ist, also eine Leiterplatte aufweist, auf welche sich der RFID-Chip und eine Koppelschleife, beispielsweise in Form einer geschlossenen Leiterbahn, befinden. Dabei kann sich die Koppelschleife auf einer ersten Seite der Leiterplatte und der RFID-Chip auf einer zweiten Seite dieser Leiterplatte befinden. Chip und Koppelschleife können sich alternativ dazu aber auch gemeinsam auf einer Seite der Leiterplatte befinden. Die Lasche kann aus einem flexiblen Material bestehen oder zumindest flexibel an dem Modular-Rahmen befestigt sein. Dies hat den Vorteil, dass der RFID-Tag gegen die Schlitzantenne gedrückt wird und gegebenenfalls mit seiner Koppelschleife direkt am Schlitz angeordnet ist.

Bei der Herstellung kann der RFID-Tag in Form einer Folie, in welche die Leiterbahn integriert ist, auf den Modulrahmen, insbesondere auf eine Lasche des Modulrahmens, aufgeklebt werden. Dies ermöglicht die händische Bearbeitung einzelner Modulrahmen, was für geringe Stückzahlen eine kostengünstige Herstellung ermöglicht.

Für größere Stückzahlen bietet es sich an, die Leiterschleife in MID-Technik, insbesondere im LDS-Verfahren, auf dem Modulrahmen, beispielsweise auf die dazugehörige Lasche, aufzubringen

Die Anbringung des RFID-Tags an dem Modulrahmen ist von besonderem Vorteil, weil der RFID-Tag durch Wechseln des Modulrahmens auch für fest installierte Steckverbinder austauschbar ist. Durch die Austauschbarkeit des Modulrahmens ist bereits automatisch eine Austauschbarkeit des RFID-Transponders oder auch eine Nachrüstbarkeit bestehender Steckverbinder gewährleistet. Insbesondere gilt dies auch für den Einsatz in bereits fest installierten Anlagen, d.h. für Steckverbinder, an die bereits Kabel fest angeschlossen sind, und die in großen Schaltanlagen oft in großer Zahl vorliegen, wobei der laufende Betrieb meist nicht oder nur kurze Zeit unterbrochen werden darf.

Die Anbringung des RFID-Tags an dem Modulrahmen ist weiterhin von besonderem Vorteil, weil der RFID-Tag sich andererseits durch die feste Endposition des Modulrahmens in dem Steckverbinder-Gehäuse automatisch in einer vorgegebenen Position zur Schlitzantenne und insbesondere zu deren Schlitz, befindet.

Vorgegeben wird diese Position beispielsweise durch zeitlich bereits vor der Herstellung des Modulrahmens erfolgende Messungen in Bezug auf die elektrische und/oder magnetische Kopplung des RFID-Tags an die Schlitzantenne und entsprechende Optimierungen dieser Position. Die so vorgegebene Position wird durch die Anordnung der Lasche am Modulrahmen realisiert. Dabei kann die Lasche mit dem Modulrahmen einstückig ausgeführt, fest damit verbunden, z.B. geklebt, oder auch lösbar daran befestigt sein.

### Ausführungsbeispiel

Ein Ausführungsbeispiel der Erfindung ist in der Zeichnung dargestellt und wird im Folgenden näher erläutert. Es zeigen:
Fig.1a einen Steckverbinder mit einem integrierten RFID-Transponder in einer 3D-Darstellung;
Fig.1b den Steckverbinder in einem Querschnitt;
Fig.2a einen Modulrahmen mit einer flexiblen Lasche und einem darauf angeordneten RFID-Tag mit Koppelschleife;
Fig.2b den Modulrahmen in einem schematischen Querschnitt;
Fig.3a ein Steckverbinder-Gehäuse mit dem eingefügten Modulrahmen;
Fig.3b das Steckverbinder-Gehäuse mit dem eingefügten Modulrahmen in einem Querschnitt.

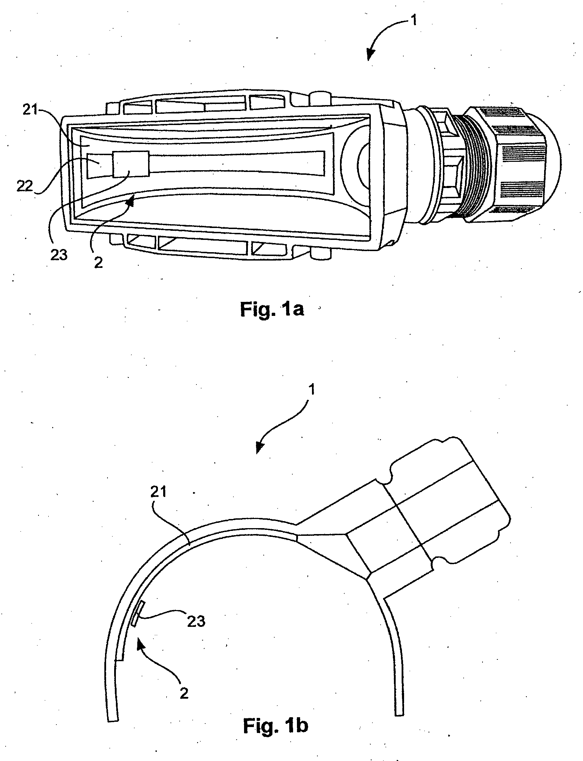

Die Fig.1a und Fig.1b stellen ein Steckverbinder-Gehäuse 1 mit einem darin integrierten RFID-Transponder 2 dar.

Der RFID-Transponder 2 umfasst dabei eine Antenne und einen RFID-Tag 23, wobei die Antenne einen Antennenkörper 21 und einen darin angeordneten Schlitz 22 umfasst, so dass es sich bei der Antenne um eine Schlitzantenne handelt.

Der Antennenkörper 21 besteht dabei aus einer Metallfolie, insbesondere aus einer selbstklebenden Kupferfolie.

Der RFID-Tag 23 ist an dem Schlitz 22 der Schlitzantenne angeordnet. Dazu ist der RFID-Tag 23 an dem Antennenköper 21 und/oder dem Steckverbinder-Gehäuse 1 befestigt, und ist beispielsweise auf den Antennenköper 21 geklebt, am Steckverbinder-Gehäuse 1 verrastet, oder in irgendeiner anderen Weise befestigt.

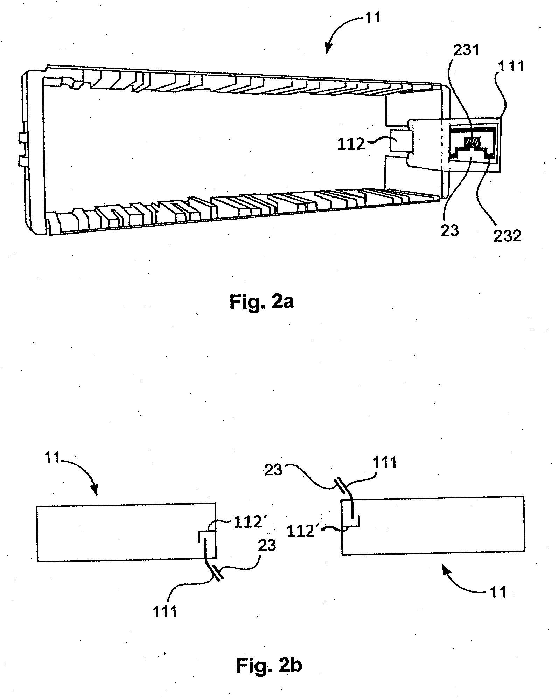

Die Fig.2a zeigt einen Modulrahmen 11. Der Modulrahmen 11 ist zu Testzwecken modifiziert, besitzt also eine Befestigungsvorrichtung, nämlich einen durch das Heraussägen zweier Schlitze gebildeten Steg 112. An diesem Steg 112 ist zu Testzwecken eine flexible Lasche 111, die aus einem durchsichtigen Material besteht, befestigt. Auf dieser Lasche 111 befindet sich der RFID-Tag 23. In diesem Fall umfasst der RFID-Tag 23 eine flexible Leiterplatte, die ebenfalls aus einem durchsichtigen Material besteht, z.B. eine Folie. Auf der flexiblen Leiterplatte ist der RFID-Chip 231 befestigt und ist elektrisch leitend mit einer auf der flexiblen Leiterplatte befindliche Koppelschleife 232, die als Leiterbahn ausgeführt ist, verbunden. Dabei befinden sich der RFID-Chip 231 und die Koppelschleife 232 gemeinsam auf einer Seite der flexiblen Leiterplatte, welche auf die Lasche 111 aufgeklebt ist. Aufgrund des durchsichtigen Materials der Lasche 111 und des durchsichtigen Materials der flexiblen Leiterplatte des RFID-Tags 23 ist der RFID-Tag 23 mit seiner Koppelschleife 232 und seinem RFID-Chip 231 in der Zeichnung zu sehen obwohl er sich im vorliegenden Fall auf einer der Betrachterposition abgewandten Seite der Lasche 111 befindet.

Alternativ dazu könnte die Lasche 111 als MID-Bauteil ausgebildet sein und die Koppelschleife 232 könnte beispielsweise im LDS-Verfahren erzeugt werden. Die Lasche 111 könnte aus einem starren Material bestehen und fest mit dem Modulrahmen 11 verbunden sein, wodurch jede gewünschte Position des RFID-Tags 23 zum Schlitz 22 festgelegt werden könnte. Auch könnte der Modulrahmen 11 zusammen mit der Lasche 111 einstückig ausgeführt sein, was eine fertigungstechnische Vereinfachung darstellen würde.

Bei der hier gezeigten Anordnung handelt es sich, wie bereits erwähnt, um einen zu Testzwecken modifizierten Modulrahmen 11. Die flexible Lasche 111 kann alternativ dazu bei einer endgültigen serienmäßigen Fertigung einer erfindungsgemäßen Anordnung zusammen mit dem Modulrahmen 11 einstückig ausgeführt, also ein fester Bestandteil des Modulrahmens 11, sein. Somit kann die Lasche 111 auch aus demselben Kunststoff wie der Modulrahmen 11 bestehen.

Die Fig. 2b stellt den Modulrahmen 11 mit der flexiblen, durchsichtigen Lasche 111 und dem RFID-Tag 23 in zwei verschiedenen Orientierungen schematisch in einem Querschnitt dar. Dabei ist die Lasche 111 an einer alternativen Befestigungseinrichtung des Modulrahmens 11, beispielsweise eine Tasche oder Klemme 112', zumindest teilweise form- und kraftschlüssig gehalten.

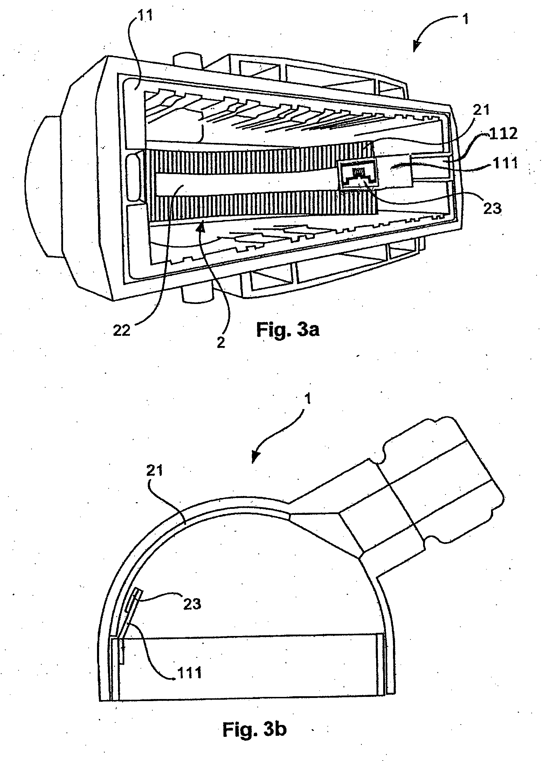

In der Fig.3a ist das Steckverbinder-Gehäuse 1 mit dem dazu gehörenden Modulrahmen 11 bestückt. Es ist leicht erkennbar, dass durch das Einfügen des Modulrahmens 11 in das Steckverbinder-Gehäuse 1 die Lasche 111 und damit der darauf befestigte RFID-Tag 23 automatisch an einer vorgegebenen Position zum Antennenkörper 21, insbesondere zum darin befindlichen Schlitz 22 befindet. Der RFID-Tag 23 wird in dieser Anordnung durch die Andruckkraft der flexiblen Lasche 111 direkt gegen den Antennenkörper 21 gedrückt. Aufgrund des durchsichtigen Materials der Lasche 111 und des durchsichtigen Materials der flexiblen Leiterplatte des RFID-Tags 23 ist der RFID-Tag 23 mit seiner Koppelschleife 232, seinem RFID-Chip 231 in der Zeichnung zu sehen, obwohl er sich auf der dem Schlitz 22 zugewandten Seite der Lasche 111 befindet. Somit besitzt die Koppelschleife 232 eine geringstmögliche Entfernung zum Schlitz 22 und ist in daher in horizontaler Richtung, d.h. in ihrer Entfernung zum Schlitz 22, festgelegt. Durch ihre Befestigung am Modulrahmen 11 ist die Lasche 111 weiterhin auch in ihrer vertikalen Richtung festgelegt, wodurch gewährleistet ist, dass sich die Koppelschleife 232 direkt an dem Schlitz 22 befindet und so nah wie möglich entlang der Ränder des Schlitzes 22 verläuft.

Alternativ dazu kann der RFID-Tag 23 auch auf der dem Schlitz 22 abgewandten Seite der Lasche 111 angeordnet sein. Dadurch ist er bei Andruck der Lasche 111 gegen den Antennenkörper 21 um einen definierten Abstand, nämlich die Stärke der Lasche 111, vom Schlitz 22 entfernt.

Durch seine Anbringung am Modulrahmen 11 kann der RFID-Tag 23 einerseits austauschbar an fest installierten Steckverbindern angeordnet sein und sich andererseits mit seiner Koppelschleife 232 automatisch an einer zur Kopplung besonders vorteilhaften Position zu dem Schlitz 22 befinden.

Diese zur Kopplung besonders vorteilhafte Position kann zuvor in entsprechenden Messungen ermittelt und bei der Herstellung des Steckverbinder-Gehäuses 1, insbesondere des Modulrahmens 11 und der Position der gegebenenfalls bei der Fertigung daran angeformten Lasche 111 berücksichtigt werden.

### Bezugszeichenliste

Steckverbinder-Gehäuse mit einem RFID-Transponder
Az.: 2012050EP
- 1: Steckverbinder-Gehäuse
- 11: Modulrahmen
- 111: Lasche
- 112: Steg (Befestigungsvorrichtung)
- 112': Tasche / Klemme (alternative Befestigungsvorrichtung)
- 2: RFID-Transponder
- 21: Antennenkörper
- 22: Schlitz
- 23: RFID-Tag
- 231: RFID-Chip
- 232: Koppelschleife

## Patentansprüche

1. Steckverbinder-Gehäuse, aufweisend einen RFID-Transponder (2), welcher einen RFID-Tag (23) mit einem RFID-Chip (231) und eine Antenne besitzt, wobei die Antenne einen Schlitz (22) aufweist, so dass es sich bei der Antenne um eine Schlitzantenne handelt, **dadurch gekennzeichnet, dass**
das Steckverbinder-Gehäuse (1) einen Modulrahmen (11) umfasst, und dass der RFID-Tag (23) an dem Modulrahmen (11), insbesondere an einer zum Modulrahmen (11) gehörenden Lasche (111), befestigt oder angeformt ist oder zumindest dazu vorgesehen ist, am Modulrahmen (11) befestigt zu werden,
wobei sich der RFID-Tag (23) durch Anordnen des Modulrahmens (11) in dem Steckverbinder-Gehäuse (1) automatisch in einer vorgegebenen Position zur Schlitzantenne und insbesondere zum darin angeordneten Schlitz (22) befindet.

2. Steckverbinder-Gehäuse nach Anspruch 1, **dadurch gekennzeichnet, dass** die Lasche (111) aus einem flexiblen Material besteht oder zumindest flexibel an dem Modular-Rahmen (11) befestigt ist.

3. Steckverbinder-Gehäuse nach einem der vorstehenden Ansprüche, **dadurch gekennzeichnet, dass** die Schlitzantenne formschlüssig an das Steckverbinder-Gehäuse (1) angefügt oder in das Steckverbinder-Gehäuse (1) eingefügt ist.

4. Steckverbinder-Gehäuse nach einem der vorstehenden Ansprüche, **dadurch gekennzeichnet, dass** die Schlitzantenne einen Antennenkörper (21) aufweist, der als Metallfolie ausgeführt ist.

5. Steckverbinder-Gehäuse nach Anspruch 3, **dadurch gekennzeichnet, dass** es sich bei der Metallfolie um eine selbstklebende Kupferfolie handelt.

6. Steckverbinder-Gehäuse nach einem der Ansprüche 1 bis 3, **dadurch gekennzeichnet, dass** es sich bei dem Steckverbinder-Gehäuse (1) um ein Spritzgussteil handelt, und dass die Schlitzantenne als Einlegeteil in das Steckverbinder-Gehäuse (1) eingelegt und mit Kunststoff umspritzt ist.

7. Steckverbinder-Gehäuse nach Anspruch 1, **dadurch gekennzeichnet, dass** das Steckverbinder-Gehäuse (1) zumindest teilweise aus einem MID (moulded interconnect device) - fähigen Kuststoff besteht oder mit einem zum LDS (Laser Direct Structuring) - fähigen Material oder Lack beschichtet ist, und dass die Schlitzantenne mit einem MID-Verfahren, insbesondere mit LDS, erzeugt ist.

8. Steckverbinder-Gehäuse nach Anspruch 1, **dadurch gekennzeichnet, dass** der RFID-Transponder (2) und insbesondere sein Antennenkörper (21) als formstabiles Einbauteil ausgeführt ist, das formschlüssig in das Steckverbinder-Gehäuse (1) einlegbar und darin fixierbar ist

9. Steckverbinder-Gehäuse nach einem der vorstehenden Ansprüche, **dadurch gekennzeichnet, dass** im RFID-Chip (231) spezifische Informationen über den Steckverbinder wie Kontaktinformationen, Pin-Belegungen und Installationshinweise gespeichert sind, um durch einen RFID-Reader ausgelesen zu werden.

10. Steckverbinder-Gehäuse nacheinem der vorstehenden Ansprüche, **dadurch gekennzeichnet, dass** der RFID-Tag (23) eine Koppelschleife (232) zur magnetischen Kopplung des RFID-Chips (231) an die Schlitzantenne aufweist.

11. Steckverbinder-Gehäuse nach einem der Ansprüche 1 bis 9, **dadurch gekennzeichnet, dass** der RFID-Tag (23) einen Faltdipol zur elektrischen Kopplung des RFID-Chips (231) an die Schlitzantenne aufweist.

## Claims

1. Plug-in connector housing, having an RFID transponder (2) which has an RFID tag (23) with an RFID chip (231) and an antenna, wherein the antenna has a slot (22), so that the antenna is a slot antenna, **characterized in that** the plug-in connector housing (1) comprises a module frame (11), and **in that** the RFID tag (23) is fastened to or integrally formed on the module frame (11), in particular to or on a lug (111) which belongs to the module frame (11), or is at least intended to be fastened to the module frame (11), wherein the RFID tag (23) is automatically located in a prespecified position in relation to the slot antenna and in particular in relation to the slot (22) arranged therein by arranging the module frame (11) in the plug-in connector housing (1).

2. Plug-in connector housing according to Claim 1, **characterized in that** the lug (111) is composed of a flexible material or is at least flexibly fastened to the modular frame (11).

3. Plug-in connector housing according to either of the preceding claims, **characterized in that** the slot antenna is integrally attached to the plug-in connector housing (1) or inserted into the plug-in connector housing (1).

4. Plug-in connector housing according to one of the preceding claims, **characterized in that** the slot antenna has an antenna body (21) which is designed as a metal foil.

5. Plug-in connector housing according to Claim 3, **characterized in that** the metal foil is a self-adhesive copper foil.

6. Plug-in connector housing according to one of Claims 1 to 3, **characterized in that** the plug-in connector housing (1) is an injection-moulded part, and **in that** the slot antenna is inserted into the plug-in connector housing (1) as an insert part and is encapsulated with plastic.

7. Plug-in connector housing according to Claim 1, **characterized in that** the plug-in connector housing (1) is at least partially composed of an MID (moulded interconnect device)-compatible plastic or is coated with an LDS (laser direct structuring)-compatible material or coating, and **in that** the slot antenna is produced using an MID method, in particular using LDS.

8. Plug-in connector housing according to Claim 1, **characterized in that** the RFID transponder (2) and, in particular, its antenna body (21) are designed as a dimensionally stable installation part which can be inserted in an interlocking manner into the plug-in connector housing (1) and can be fixed therein.

9. Plug-in connector housing according to one of the preceding claims, **characterized in that** specific information about the plug-in connector, such as contact information, pin occupation and installation instructions, are stored in the RFID chip (231) in order to be read out by an RFID reader.

10. Plug-in connector housing according to one of the preceding claims, **characterized in that** the RFID tag (23) has a coupling loop (232) for magnetically coupling the RFID chip (231) to the slot antenna.

11. Plug-in connector housing according to one of Claims 1 to 9, **characterized in that** the RFID tag (23) has a folded dipole for electrically coupling the RFID chip (231) to the slot antenna.

## Revendications

1. Boîtier de connecteur comprenant un transpondeur RFID (2) comprenant une étiquette RFID (23) munie d'une puce RFID (231) et une antenne, dans lequel l'antenne comporte une fente (22) de sorte que l'antenne est une antenne à fente,
**caractérisé en ce que** le boîtier de connecteur (1) comprend un châssis de module (11), et **en ce que** l'étiquette RFID (23) est fixée ou moulée sur le châssis de module (11), en particulier sur une patte (111) appartenant au châssis de module (11), ou est prévue au
moins pour être fixée sur le châssis de module (11), dans lequel l'étiquette RFID (23) est automatiquement située à une position prédéterminée par rapport à l'antenne à fente, et en particulier par rapport à la fente (22) qui y est disposée, par mise en place du châssis de module (11) dans le boîtier de connecteur (1).

2. Boîtier de connecteur selon la revendication 1, **caractérisé en ce que** la patte (111) est constituée d'un matériau flexible ou est au moins fixée de manière flexible dans le cadre modulaire (11).

3. Boîtier de connecteur selon l'une quelconque des revendications précédentes, **caractérisé en ce que** l'antenne à fente est fixée au boîtier de connecteur (1) ou est insérée dans le boîtier de connecteur (1) par complémentarité de forme.

4. Boîtier de connecteur selon l'une quelconque des revendications précédentes, **caractérisé en ce que** l'antenne à fente comprend un corps d'antenne (21) qui est réalisé sous la forme d'une feuille métallique.

5. Boîtier de connecteur selon la revendication 3, **caractérisé en ce que** la feuille métallique est une feuille de cuivre auto-adhésive.

6. Boîtier de connecteur selon l'une quelconque des revendications 1 à 3, **caractérisé en ce que** le boîtier de connecteur (1) est une pièce moulée par injection et **en ce que** l'antenne à fente est insérée dans le boîtier de connecteur (1) sous la forme d'une pièce d'insertion et est encapsulée dans une matière plastique.

7. Boîtier de connecteur selon la revendication 1, **caractérisé en ce que** le boîtier de connecteur (1) est constitué au moins partiellement d'une matière plastique appropriée pour un MID (dispositif d'interconnexion moulé) ou est revêtu d'un matériau ou d'une laque approprié pour la LDS (Laser. Direct Structuring), et **en ce que** l'antenne à fente est réalisée par un procédé MID, en particulier par LDS.

8. Boîtier de connecteur selon la revendication 1, **caractérisé en ce que** le transpondeur RFID (2) et en particulier son corps d'antenne (21) est conçu comme une pièce de montage de forme stable qui peut être insérée dans le boîtier de connecteur (1) par complémentarité de forme et qui peut être fixée dans celle-ci.

9. Boîtier de connecteur selon l'une quelconque des revendications précédentes, **caractérisé en ce que** des informations spécifiques concernant le connecteur, telles que des informations de contact, des affectations de broches et des instructions d'installation, sont stockées dans la puce RFID (231) afin d'être lues par un lecteur RFID.

10. Boîtier de connecteur selon l'une quelconque des revendications précédentes, **caractérisé en ce que** l'étiquette RFID (23) comprend une boucle de couplage (232) destinée à coupler magnétiquement la puce RFID (231) à l'antenne à fente.

11. Boîtier de connecteur selon l'une quelconque des revendications 1 à 9, **caractérisé en ce que** l'étiquette RFID (23) comprend un dipôle pliant destiné à coupler électriquement la puce RFID (231) à l'antenne à fente.
